# EUROPEAN PATENT APPLICATION

(11) **EP 1 786 148 A1**
(43) Date of publication of application: **16.05.2007**
(21) Application number: 06722387.5
(22) Date of filing: 21.04.2006
(51) Int. Cl.: H04L 12/54

(54) **A METHOD FOR DATA TRANSFERRING BETWEEN EXCHANGER AND TERMINAL, FSK PROCESS MODULE, TERMINAL AND EXCHANGER THEREOF**

(30) Priority: 22.04.2005 CN 200510034408
(71) Applicant: Huawei Technologies Co., Ltd., Longgang District Shenzhen Guangdong 518129 (CN)
(72) Inventor: ZENG, Xiangyong,Huawei Administration Building, Shenzhen,Guangdong 518219 (CN)
(74) Representative: Manitz, Gerhart
(86) International application number: PCT/CN2006/000752
(87) International publication number: WO 2006/111099

(57) **Abstract**

Embodiments of the present invention provide a method for data transmission between a switch and a terminal, which includes: transmitting data between the switch and the terminal in a bidirectional Frequency Shift Keying (FSK) mode. A modulation mode of the data transmitted in the FSK mode is a CP-BFSK mode, and the data transmitted in the FSK mode is transmitted in a binary synchronous serial mode and is transmitted in byte sequence. The embodiments of the present invention provides an FSK processing module, a terminal, and a switch as well. Owning to implementing service data transmission in the bidirectional FSK mode, the speed of the information transmission between the switch and the terminal is greatly improved so as to provide support for developing interaction services with a great amount of data between the switch and the terminal in communication plane.

## Description

### Field of the Invention

The present invention relates to the field of data communication technologies, and more particularly, to a method for data transmission between a switch and a terminal, a Frequency Shift Keying (FSK) processing module, a terminal, and a switch.

### Background of the Invention

At present, services developed newly require a large amount of data transmission between a switch and a terminal in a higher and higher speed. Meanwhile, with reference to GB/T 15279-94, "Automatic Telephone Technique Condition", it can be learnt that data transmission between the switch and the terminal is implemented generally in a Dual-Tone Multiple Frequency (DTMF) mode, and it will take at least 80ms to transmit one bit data in this mode. In the case of a large amount of data, the data transmission is time-consuming, which is a bottleneck for developing and spreading various new services. Besides the DTMF mode, communication manufacturers have developed a data transmission mode based on FSK mode. However, this data transmission mode is only applied in a few circumstances, for example, a display of the calling number. Moreover, the switch transmits data to the terminal in the FSK mode in general, while the terminal still transmits data to the switch in the DTMF mode.

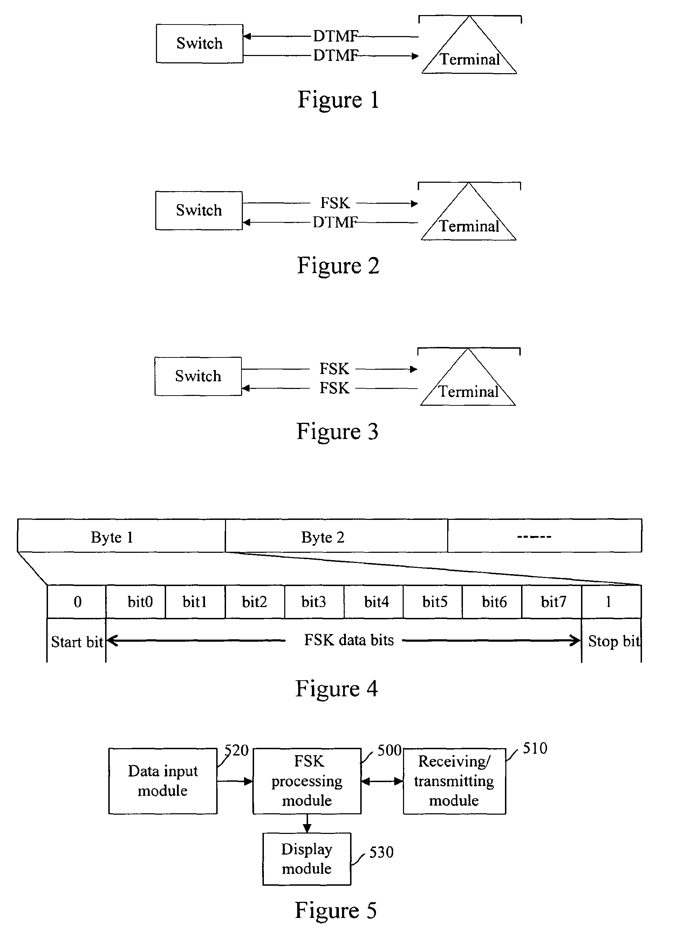

A first related art is shown in Figure 1, the switch transmits data to the terminal in the DTMF mode, and the terminal also transmits information to the switch in the DTMF mode. Such a data transmission mode is time-consuming. For instance, when the switch needs to transmit contents of 100 bytes to the terminal and the terminal needs to return data of 100 bytes to the switch, it will take about 2x80msx 100=16s in the half-duplex mode, which is unacceptable for uers.

A second related art is shown in Figure 2, the switch transmits data to the terminal in the FSK mode by using the calling identification information transmission technique, while the terminal transmits information to the switch in the DTMF mode. Compared with the technical scheme shown in Figure 1, the second related art has made an improvement that the switch transmits data to the terminal in the FSK mode so as to save the transmssion time of downlink data. According to a speed of 1200 bits/s for transmitting FSK data, it can be calculated theoretically that 150 bytes may be transmitted per second (1200/8=150). Still take the example that the switch transmits contents of 100 bytes to the terminal and the terminal returns data of 100 bytes to the switch. It can be calculated that the overall time of the data transmission is 8.7s, i.e., 80ms×100+(1000/150ms)×100=8.7s (such additional information data as synchronous guiding string and the like is not involved). This time duration is still too long for uers.

### Summary of the Invention

Embodiments of the present invention provide a method for data transmission between a switch and a terminal, an FSK processing module, a terminal, and a switch, so as to solve the problem that the transmission with a mass of data between the switch and the terminal is time-consuming.

A method for data transmission between a switch and a terminal includes:
transmitting data between the switch and the terminal in a bidirectional Frequency Shift Keying (FSK) mode.

A modulation mode of the data transmitted in the FSK mode is a Continuous Phrase Binary Frequency Shift Keying (CP-BFSK) mode.

The data transmitted in the FSK mode is transmitted in a binary synchronous serial mode.

The data transmitted in the FSK mode is transmitted in byte sequence.

A byte of the data transmitted in the FSK mode contains a start bit identification and a stop bit identification;
a byte of the data transmitted in the FSK mode is transmitted in the sequence of the start bit identification, FSK data bits and the stop bit identification.

A data packet transmitted in the bidirectional FSK mode includes a synchronous guiding string, an information length, an information serial number, contents of message layer, and a checksum.

The data packet further includes an information type for indicating a transmission direction of the data packet.

A Frequency Shift Keying (FSK) processing module includes:
an FSK data packet generating module, for generating a first FSK data packet and outputting the first FSK data packet through a receiving/transmitting module in a switch or a terminal;
an FSK data packet parsing module, for parsing service data of a sesond FSK data packet upon receiving the second FSK data packet through the receiving/transmitting module in the switch or the terminal.

The receiving/transmitting module is further used for modulating and demodulating the FSK data packet in a Continuous Phrase Binary Frequency Shift Keying (CP-BFSK) mode and transmitting the FSK data packet modulated in a binary asynchronous serial mode.

A terminal includes:
a Frequency Shift Keying (FSK) processing module, for generating a first FSK data packet according to service data generated by the terminal and transmitting the first FSK data packet; and parsing service data of a second FSK data packet;
a receiving/transmitting module, for modulating the first FSK data packet in an FSK mode upon receiving the first FSK data packet, and outputting the first FSK data packet modulated to a switch; and demodulating the second FSK data packet upon receiving the second FSK data packet from the switch, and transmitting the second FSK data packet demoduled to the FSK processing module.

The terminal further includes a data input module; wherein
the FSK processing module generates the first FSK data packet according to the service data from the data input module.

The FSK processing module includes:
an FSK data packet generating module, for generating the first FSK data packet and transmitting the first FSK data packet to the receiving/transmitting module;
an FSK data packet parsing module, for parsing the service data of the second FSK data packet.upon receiving the second FSK data packet.

A switch includes:
a Frequency Shift Keying (FSK) processing module, for generating a first FSK data packet according to service data generated by the switch and transmitting the first FSK data packet; and parsing service data of a second FSK data packet;
a receiving/transmitting module, for modulating the first FSK data packet in an FSK mode upon receiving the first FSK data packet, and outputting the first FSK data packet modulated to a terminal; and demodulting the second FSK data packet upon receiving the second FSK data packet from the terminal, and transmitting the second FSK data packet demodulated to the FSK processing module.

The switch further includes a main control module; wherein
the FSK processing module generates the first FSK data packet according to the service data generated by the main control module and transmits the parsed service data of the second FSK data packet to the main control module.

The FSK processing module includes:
an FSK data packet generating module, for generating the first FSK data packet and transmitting the first FSK data packet to the receiving/transmitting module;
an FSK data packet parsing module, for parsing the service data of the second FSK data packet upon receiving the second FSK data packet.

The embodiments of the present invention provide a method for data transmission in the FSK mode. Owning to implementing service data transmission in the bidirectional FSK mode, the speed of the information transmission between the switch and the terminal is greatly improved so as to provide support for developing interaction services with a great amount of data between the switch and the terminal in communication plane.

### Brief Description of the Drawings

Figure 1 is a simplified schematic diagram illustrating a method for data transmission between a switch and a terminal in accordance with the first related art.
Figure 2 is a simplified schematic diagram illustrating a method for data transmission between a switch and a terminal in accordance with the second related art.
Figure 3 is a simplified schematic diagram illustrating a method for data transmission between a switch and a terminal in accordance with an embodiment of the present invention.
Figure 4 is a simplified schematic diagram illustrating a format and transmission sequence of an FSK data byte.
Figure 5 is a simplified schematic diagram illustrating a structure of a terminal in accordance with an embodiment of the present invention.
Figure 6 is a simplified schematic diagram illustrating a structure of a switch in accordance with an embodiment of the present invention.
Figure 7 is a simplified schematic diagram illustrating a structure of an FSK processing module in accordance with an embodiment of the present invention.
Figure 8 is a simplified flow chart illustrating data transmission between a switch and a terminal in accordance with an embodiment of the present invention.

### Detailed Description of the Invention

The present invention is hereinafter described in detail with reference to the accompanying drawings and embodiments.

As shown in Figure 3, when data are transmitted between a switch and a terminal in a bidirectional FSK mode, the frequency of logic 1 of FSK signal is 1200Hz±1%, the frequency of logic 0 of FSK signal is 2200Hz±1%, and the baud rate is 1200Baud±1.2%. The modulation mode is a Continuous Phase Binary Frequency-Shift Keying (CP-BFSK) mode, and the data transmission mode is a binary asynchronous serial mode.

As shown in Figure 4, a format and transmission sequence of an FSK data byte should meet the demands of: a data byte has a start bit "0" and a stop bit "1".

The transmission sequence of the data byte is that the start bit is transmitted first, then the FSK data bits, and finally the stop bit. The FSK data is transmitted in the sequence of byte, that is, byte 1 is transmitted first, and then byte 2. By analogy, the transmitted data signals are continuous.

The format of an FSK data packet adopted during the data transmission in the bidirectional FSK mode is shown in Table 1.

**Table 1**

| | | | | | |
|---|---|---|---|---|---|
| Synchronous guiding string | Information type | Information length | Information serial number | Information content of message layer | Checksum |

### 1. Synchronous guiding string

The synchronous guiding string is composed of two parts. The first part includes continuous 80 alternate bits of "0" and "1" ("0" is transmitted before "1", and the number of "0" and "1" is 80); the second part includes continuous 40 bits of "1" which constitutes a synchronous end string. After the receiver reads at least 50 alternate bits of "0" and "1" and at least 20 continuous bits of "1" serving as the synchronous end string, the synchronization may be considered established.

### 2. Information type

The information type indicates the type of information contents. The length of the information type field is 1 byte and the detailed contents are shown in Table 2.

**Table 2**

| Transmission direction | Information type |
|---|---|
| Switch to terminal | 0x84 |
| Terminal to switch | 0x87 |

### 3. Information length

The information length means a sum of the number of the bytes of the information serial number and the number of the bytes of information contents of message layer. The length of the information length field is 1 byte.

### 4. Information serial number

The information serial number refers to a serial number of the current FSK data packet which is numbered from 0x00. The length of the information serial number filed is 1 byte.

### 5. Information contents of message layer

The information contents of message layer are encoded in ASCII. For example, when needing to transmit a call fee of 2.30 yuan of the user to the terminal, the switch encodes the call fee into "0x32 0x2E 0x33 0x30", and the terminal may display the call fee to the user conveniently after receiving the data. This encoding format may meet data encoding requirements of all existing services.

### 6. Checksum

The checksum is used for finding errors during the data transmission, its value is the complement of modulo 256 of the sum of all bytes of the data packet except the synchronous guiding string. The length of the checksum field is 1 byte.

Still take the example that the switch transmits contents of 100 bytes to the terminal and the terminal returns data of 100 bytes to the switch. Without the spended time of transmitting additional information contents involved, the overall time to be spended is 200/150=1.3s (in real application, the overall time to be spended is about 3s if such additional information contents as the synchronous guiding string is involved). Compared with the speed of the data transmission of the first related art and the second related art, the speed of the data transmission in this mode is greatly improved. Table 3 shows the experimental data of transmitting data in bidirectional FSK mode.

**Table 3**

| The amount of transmitted data | Spended time (unit: ms) |
|---|---|
| 10 | 220 |
| 30 | 390 |
| 50 | 560 |
| 80 | 810 |
| 100 | 970 |

In the embodiments of the present invention, an FSK processing module and a receiving/transmitting module may be set in both the switch and the terminal.

Figure 5 is a simplified schematic diagram illustrating a structure of a terminal in accordance with an embodiment of the present invention, wherein an FSK processing module 500, connected with a receiving/transmitting module 510, is used for generating a first FSK data packet according to service data generated by the terminal, transmitting the first FSK data packet to the receiving/transmitting module 510, and parsing the service data of a second FSK data packet from the receiving/transmitting module 510. The receiving/transmitting module 510 is used for modulating the first FSK data packet in an FSK mode upon receiving the first FSK data packet from the FSK processing module 500, and outputting the first FSK data packet modulated; demodulating the second FSK data packet upon receiving the second FSK data packet transmitted to the terminal, and transmitting the second FSK data packet to the FSK processing module 500. The terminal may further include a data input module 520 and a display module 530 which are all connected with the FSK processing module 500. The FSK processing module 500 may generate the first FSK data packet according to the service data from the data input module 520 and transmit the parsed service data, e.g., this call fee, to the display module 530. The display module 530 displays the received service data to the user.

An FSK processing module 600 is used for generating a first FSK data packet according to service data generated by the switch, transmitting the first FSK data packet to a receiving/transmitting module 610, and parsing the service data of a second FSK data packet from the receiving/transmitting module 610. The receiving/transmitting module 610 is used for modulating the first FSK data packet in an FSK mode upon receiving the first FSK data packet from the FSK processing module 600, and outpuitting the first FSK data packet modulated; demodulating the second FSK data packet upon receiving the second FSK data packet transmitted to the switch, and transmitting the FSK data packet to the FSK processing module 600. The switch may further include a main control module 620 connected with the FSK processing module 600. Therefore, the FSK processing module 600 may generate the first FSK data packet according to the service data from the main control module 620 and transmit the parsed service data to the main control module 620.

The above FSK processing module may further include an FSK data packet generating module 701 and an FSK data packet parsing module 702.

The FSK data packet generating module 701 is used for generating a first FSK data packet and transmitting the first FSK data packet to the opposite end through the receiving/transmitting module in the switch or the terminal. For the terminal, the FSK data packet generating module 701 is used for receiving service data information inputted by the user through the terminal data input module and generating the first FSK data packet with the service data information in the format shown in Table 1. For the switch, the FSK data packet generating module 701 is used for receiving service data information from the main control module of the switch and generating the first FSK data packet with the service data information in the format shown in Table 1.

The FSK data packet parsing module 702 is used for receiving a second FSK data packet from the opposite end through the receiving/transmitting module in the switch or the terminal and parsing service data of the second FSK data packet for processing by the local. For the terminal, the service data parsed by the FSK data packet parsing module 702 may be transmitted to the display module of the terminal for displaying or to a storage module for storing. For the switch, the service data parsed by the FSK data packet parsing module 702 may be transmitted to the main control module of the switch for processing.

In addition, the receiving/transmitting module may modulate the first FSK data packet and demodulate the second FSK data packet in the CP-BFSK mode and transmit the first FSK data packet modulated in a binary asynchronous serial mode. Practically, the above FSK processing module may be set as a separate entity independent of the switch or the terminal.

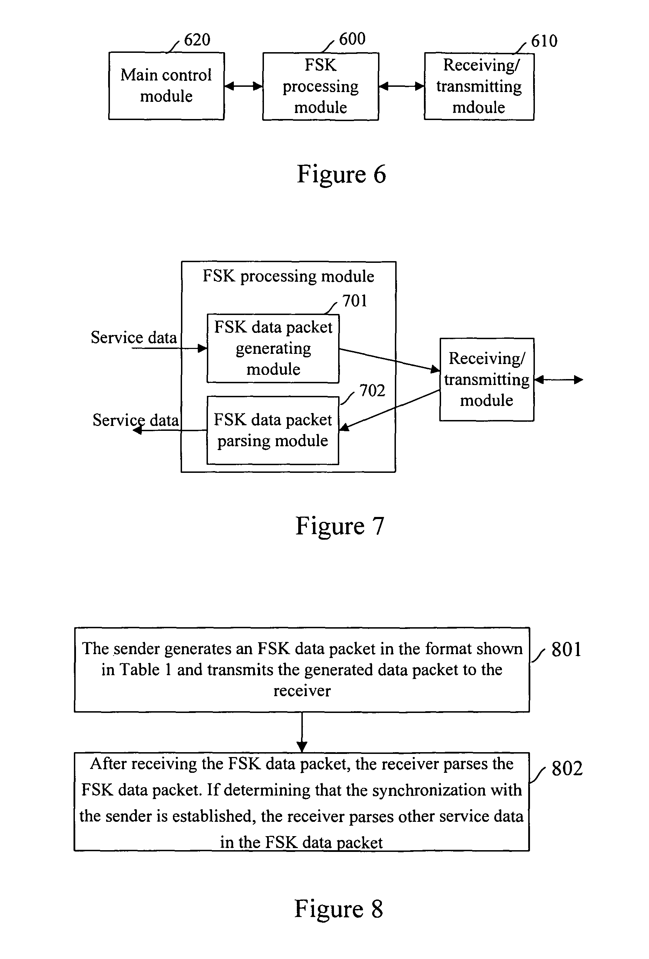

As shown in Figure 8, the procedure of the data transmission includes the following steps.

Step 801: a sender generates an FSK data packet in the format shown in Table 1 and transmits the generated data packet to a receiver.

Step 802: after receiving the FSK data packet, the receiver parses the FSK data packet. If determining that the synchronization with the sender is established, the receiver parses service data in the FSK data packet.

If the above sender is a terminal and the receiver is a switch, the terminal generates, when needing to perform a service data interaction with the switch, the FSK data packet in the format shown in Table 1 according to service data to be interacted, such as a card number and password of the user, and transmits the generated FSK data packet to the switch. After receiving the FSK data packet, the switch first establishes synchronization according to the data in the synchronous guiding string, and then obtains the service data in the FSK data packet, and performs processing according to the service data, for example, validates the card number and password of the user, after the synchronization is established.

If the above sender is a switch and the receiver is a terminal, the switch generates, when needing to perform a service data interaction with the terminal, the FSK data packet in the format shown in Table 1 according to the service data to be interacted, such as a call fee of the user, and transmits the generated FSK data packet to the terminal. After receiving the FSK data packet, the terminal first establishes synchronization according to the data in the synchronous guiding string, and then obtains the service data in the FSK data packet, and performs processing according to the service data, for example, display the fee on the display screen of the terminal for the user, after the synchronization is established.

The foregoing description is only preferred embodiments of this invention and is not for use in limiting the protection scope thereof. All the modifications, equivalent replacements or improvements in the scope of the present invention's sprit and principles shall be included in the protection scope of the present invention.

## Claims

1. A method for data transmission between a switch and a terminal, comprising:
transmitting data between the switch and the terminal in a bidirectional Frequency Shift Keying (FSK) mode.

2. A method according to Claim 1, wherein a modulation mode of the data transmitted in the FSK mode is a Continuous Phrase Binary Frequency Shift Keying (CP-BFSK) mode.

3. A method according to Claim 1, wherein the data transmitted in the FSK mode is transmitted in a binary synchronous serial mode.

4. A method according to Claim 1, wherein the data transmitted in the FSK mode is transmitted in byte sequence.

5. A method according to Claim 4, wherein a byte of the data transmitted in the FSK mode contains a start bit identification and a stop bit identification;
a byte of the data transmitted in the FSK mode is transmitted in the sequence of the start bit identification, FSK data bits and the stop bit identification.

6. A method according to Claim 1, wherein a data packet transmitted in the bidirectional FSK mode comprises a synchronous guiding string, an information length, an information serial number, contents of message layer, and a checksum.

7. A method according to Claim 6, wherein the data packet further comprises an information type for indicating a transmission direction of the data packet.

8. A Frequency Shift Keying (FSK) processing module, comprising:
an FSK data packet generating module, for generating a first FSK data packet and outputting the first FSK data packet through a receiving/transmitting module in a switch or a terminal;
an FSK data packet parsing module, for parsing service data of a sesond FSK data packet upon receiving the second FSK data packet through the receiving/transmitting module in the switch or the terminal.

9. An FSK processing module according to Claim 8, wherein the receiving/transmitting module is further used for modulating and demodulating the FSK data packet in a Continuous Phrase Binary Frequency Shift Keying (CP-BFSK) mode and transmitting the FSK data packet modulated in a binary asynchronous serial mode.

10. A terminal, comprising:
a Frequency Shift Keying (FSK) processing module, for generating a first FSK data packet according to service data generated by the terminal and transmitting the first FSK data packet; and parsing service data of a second FSK data packet;
a receiving/transmitting module, for modulating the first FSK data packet in an FSK mode upon receiving the first FSK data packet, and outputting the first FSK data packet modulated to a switch; and demodulating the second FSK data packet upon receiving the second FSK data packet from the switch and transmitting the second FSK data packet demoduled to the FSK processing module.

11. A terminal according to Claim 10, further comprising a data input module; wherein
the FSK processing module generates the first FSK data packet according to the service data from the data input module.

12. A terminal according to Claim 10, wherein the FSK processing module comprises:
an FSK data packet generating module, for generating the first FSK data packet and transmitting the first FSK data packet to the receiving/transmitting module;
an FSK data packet parsing module, for parsing the service data of the second FSK data packet.upon receiving the second FSK data packet.

13. A switch, comprising:
a Frequency Shift Keying (FSK) processing module, for generating a first FSK data packet according to service data generated by the switch and transmitting the first FSK data packet; and parsing service data of a second FSK data packet;
a receiving/transmitting module, for modulating the first FSK data packet in an FSK mode upon receiving the first FSK data packet, and outputting the first FSK data packet modulated to a terminal; and demodulting the second FSK data packet upon receiving the second FSK data packet from the terminal, and transmitting the second FSK data packet demodulated to the FSK processing module.

14. A switch according to Claim 13, further comprising a main control module; wherein
the FSK processing module generates the first FSK data packet according to the service data generated by the main control module and transmits the parsed service data of the second FSK data packet to the main control module.

15. A switch according to Claim 13, wherein the FSK processing module comprises:
an FSK data packet generating module, for generating the first FSK data packet and transmitting the first FSK data packet to the receiving/transmitting module;
an FSK data packet parsing module, for parsing the service data of the second FSK data packet upon receiving the second FSK data packet.
